# FASCICULE DE BREVET EUROPEEN

(11) **EP 1 706 615 B1**
(45) Date de publication et mention de la délivrance du brevet: **28.04.2010**
(21) Numéro de dépôt: 04816384.4
(22) Date de dépôt: 15.12.2004
(51) Int. Cl.: F02B 29/04, F02M 25/07

(54) **MODULE D'ECHANGE DE CHALEUR POUR LA REGULATION DE LA TEMPERATURE DES GAS ADMIS DANS UN MOTEUR THERMIQUE DE VEHICULE AUTOMOBILE**
WÄRMETAUSCHERMODUL ZUR EINSTELLUNG DER TEMPERATUR VON EINLASSGAS IN EINEM VERBRENNUNGSMOTOR FÜR EIN KRAFTFAHRZEUG
HEAT EXCHANGER MODULE FOR ADJUSTING THE TEMPERATURE OF INTAKE GAS IN A HEAT ENGINE FOR A MOTOR VEHICLE

(30) Priorité: 24.12.2003 FR 0315382
(43) Date de publication de la demande: 04.10.2006
(73) Titulaire: VALEO SYSTEMES THERMIQUES, 78320 Le Mesnil Saint-Denis (FR)
(72) Inventeur: CHANFREAU, Mathieu, F-78650 Saulx Marchais (FR)
(74) Mandataire: Rolland, Jean-Christophe
(86) Numéro de dépôt international: PCT/FR2004/003223
(87) Numéro de publication internationale: WO 2005/071240

(56) Documents cités:
- EP-A- 0 987 427
- EP-A- 1 164 280
- WO-A-2004/044402
- DE-A- 19 853 455
- ES-A- 2 174 739
- FR-A- 2 835 884
- FR-A- 2 840 363
- US-A- 5 632 256

## Description

L'invention se rapporte aux échangeurs de chaleur pour refroidir ou réchauffer les gaz admis dans les chambres de combustion d'un moteur thermique de véhicule automobile.

Elle concerne plus particulièrement un module d'échange de chaleur comprenant un refroidisseur d'air d'alimentation et un refroidisseur des gaz d'échappement recirculés, le refroidisseur d'air d'alimentation comprenant une boîte d'entrée et une boîte de sortie de l'air d'alimentation, une canalisation d'entrée d'air d'alimentation étant raccordée à la boîte d'entrée et une canalisation de sortie d'air d'alimentation à la boîte de sortie du refroidisseur d'air d'alimentation, le refroidisseur des gaz d'échappement recirculés comprenant une boîte d'entrée et une boîte de sortie des gaz d'échappement recirculés, une canalisation d'entrée des gaz d'échappement recirculés étant raccordée à la boîte d'entrée du refroidisseur des gaz d'échappement recirculés.

Les moteurs thermiques turbo-compressés, en particulier les moteurs diesel ou à essence, sont alimentés par un air sous-pression appelé "air de suralimentation", provenant d'un turbo-compresseur alimenté par les gaz d'échappement du moteur, voir FR 2 840 363.

Il est nécessaire de refroidir cet air avant son admission dans le moteur. On utilise pour cela, de manière classique, un refroidisseur appelé refroidisseur d'air de suralimentation ou plus généralement refroidisseur d'air d'alimentation.

Par ailleurs, il est connu de recirculer une partie des gaz d'échappement vers l'admission du moteur pour qu'ils soient plus complètement brûlés. Mais comme ces gaz sont à une température maximale très élevée (400°C à 900°C), il est connu de les refroidir en les faisant circuler dans un autre échangeur alimenté par un liquide de refroidissement, voir EP 1 164 280.

Il existe des architectures dans lesquelles le refroidisseur d'air de suralimentation est dérivé, soit ponctuellement, soit pour améliorer la montée en température du moteur en phase de démarrage à froid, voir US 5, 632, 256. Il existe également des architectùres dans lesquelles le refroidisseur des gaz d'échappement est dérivé pour réduire la pollution en phase de démarrage à froid.

Toutefois, ces architectures connues ne permettent pas de réguler la température de l'air d'admission. Les vannes utilisées pour répartir l'air d'admission entre le refroidisseur d'air de suralimentation et la dérivation qui le contourne, ainsi que pour refroidir les gaz d'échappement recirculés entre le refroidisseur des gaz d'échappement recirculés et la dérivation qui contourne ce refroidisseur, servent à réguler respectivement le débit d'air d'alimentation et le débit des gaz recirculés, non leur température. Les températures des fluides gazeux à la sortie des refroidisseurs sont subies et non régulées.

La présente invention a précisément pour objet un module d'échange de chaleur qui remédie à ces inconvénients. Ce but est atteint par le fait que le module d'échange de chaleur de l'invention comprend une première dérivation de contournement reliant directement la boîte d'entrée à la boîte de sortie du refroidisseur des gaz d'échappement recirculés, et intégrée au module d'échange de chaleur.

Selon l'invention, le module d'échange de chaleur comporte une seconde dérivation de contournement reliant directement la boîte d'entrée à la boîte de sortie du refroidisseur d'air d'alimentation et intégrée au module d'échange de chaleur.

L'intégration de la ou des dérivations au module d'échange de chaleur permet de réduire son encombrement et par conséquent le volume occupé dans le compartiment moteur du véhicule. En outre, le raccordement du module est simplifié étant donné qu'il comporte une entrée unique de l'air d'alimentation et une entrée unique des gaz d'échappement recirculés.

Dans ce qui précède, l'expression "dérivation intégrée" signifie que la dérivation commence en aval de l'entrée d'air d'alimentation ou des gaz d'échappement recirculés et débuche en amont de la sortie du mélange de l'air d'alimentation et des gaz d'échappement recirculés admis dans les chambres du véhicule automobile.

Avantageusement le module d'échange de chaleur comporte de premiers moyens de répartition pour répartir les gaz d'échappement recirculés entre le refroidisseur des gaz d'échappement recirculés et la première dérivation de contournement. Il est en outre avantageux que le module d'échange de chaleur comporte de seconds moyens de répartition pour répartir l'air d'alimentation entre le refroidisseur d'air d'alimentation et la seconde dérivation de contournement.

Dans un mode de réalisation préféré, le module de l'invention comporte des moyens de commande reliés aux premiers et aux seconds moyens de répartition pour ajuster la proportion des gaz d'admission refroidis ou réchauffés, des gaz d'admission qui n'ont été ni refroidis ni réchauffés, des gaz d'échappement recirculés refroidis et des gaz d'échappement recirculés qui n'ont été ni refroidis ni réchauffés, selon une loi prédéfinie.

Dans un mode de réalisation particulier, la première et la seconde dérivations sont distinctes l'une de l'autre. Dans un autre mode de réalisation particulier, la première et la seconde dérivations sont confondues en une dérivation unique.

Avantageusement, le module comporte au moins une vanne proportionnelle, par exemple une vanne à organe rotatif, pour gérer à la fois le débit d'air d'admission et le débit des gaz d'échappement recirculés, ainsi que la température du mélange d'admission.

Dans un mode de réalisation particulier, les dérivations et les moyens de répartition de l'air d'alimentation et des gaz d'échappement recirculés constituent un sous-module rapporté sur le module d'échange de chaleur.

L'entrée de l'air d'alimentation dans la boîte d'entrée du refroidisseur d'air d'alimentation et la sortie de cet air d'alimentation, éventuellement mélangé aux gaz d'échappement recirculés de la boîte de sortie du refroidisseur d'air d'alimentation peuvent être situées d'un même côté du module d'échangé de chaleur. Dans une autre réalisation, l'entrée de l'air d'alimentation et la sortie de cet air d'alimentation sont situées sur des côtés différents du module.

La circulation des gaz d'échappement recirculés dans le radiateur des gaz d'échappement recirculés peut s'effectuer en deux passes selon un parcours en forme de U.

Selon une autre caractéristique de l'invention, le module d'échange de chaleur comporte une canalisation d'entrée des gaz d'échappement recirculés qui est raccordée à la boîte de sortie du refroidisseur des gaz d'échappement recirculés, cette dernière constituant la première dérivation de contournement, le refroidisseur comportant un canal de transfert pour amener la fraction à refroidir des gaz d'échappement recirculés jusqu'à la boîte d'entrée ; une vanne étant disposée à la jonction de la boîte de sortie et du canal de transfert pour répartir les gaz d'échappement recirculés entre la boîte de sortie et le canal de transfert.

Conformément à une caractéristique avantageuse de l'invention, le module d'échange de chaleur comporte un capteur de la température de l'air d'alimentation situé dans une zone de la boîte de sortie du refroidisseur d'air d'alimentation qui n'est pas traversée par les gaz d'échappement recirculés.

A cette fin, le refroidisseur des gaz d'échappement recirculés peut présenter une longueur inférieure à la longueur du refroidisseur de l'air d'alimentation de manière à ménager une zone de la boîte de sortie du refroidisseur de l'air d'alimentation qui n'est pas traversée par les gaz d'échappement recirculés.

Conformément à une autre caractéristique avantageuse de l'invention, le refroidisseur de l'air d'alimentation comporte un déflecteur des gaz d'échappement recirculés, disposé en face de la sortie des gaz d'échappement recirculés afin de dévier ces gaz vers la boîte de sortie du refroidisseur de l'air d'alimentation pour éviter l'encrassement du faisceau du refroidisseur d'air d'alimentation par les particules des gaz d'échappement recirculés et améliorer le mélange air d'alimentation/gaz d'échappement recirculés.

Conformément à une autre caractéristique de l'invention, les gaz d'échappement recirculés passent de la boîte de sortie du refroidisseur des gaz d'échappement recirculés dans la boîte de sortie du refroidisseur d'air d'alimentation par un orifice de sortie dont la section est inférieure ou égale à la section de passage des gaz dans le refroidisseur des gaz d'échappement recirculés.

Conformément à une autre caractéristique de l'invention, les gaz d'échappement recirculés passent de la boîte de sortie du refroidisseur des gaz d'échappement recirculés dans la boîte de sortie du refroidisseur d'air d'alimentation par un orifice de sortie dont la section est supérieure à la section de passage des gaz dans le refroidisseur des gaz d'échappement recirculés, la boîte de sortie du refroidisseur des gaz d'échappement recirculés et la boîte de sortie du refroidisseur d'air d'alimentation étant raccordées l'une à l'autre par un divergent.

Selon encore une autre caractéristique de l'invention, les gaz d'échappement recirculés débouchent directement dans la boîte de sortie du refroidisseur d'air d'alimentation, cette boîte jouant fonctionnellement le rôle d'une boîte de sortie pour le refroidisseur des gaz d'échappement recirculés.

D'autres caractéristiques et avantages de l'invention apparaîtront encore à la lecture de la description qui suit d'exemples de réalisation donnés à titre illustratif en référence aux figures annexées.

Sur ces figures :
- la figure 1 est une vue en perspective d'un module d'échange de chaleur conforme à un premier mode de réalisation de l'invention, à l'état assemblé ;
- la figure 2 est une vue en perspective éclatée du module d'échange de chaleur représenté sur la figure 1 ;
- la figure 3 est une vue de dessous du module d'échange de chaleur représenté sur les figures 1 et 2 ;
- la figure 4 est une vue de détail en perspective d'une dérivation du module d'échange de chaleur des figures 1 à 3 ;
- la figure 5 est une vue schématique de dessus d'un module d'échange de chaleur conforme à un deuxième mode de réalisation de l'invention ;
- les figure 6 et 7 illustrent des variantes de réalisation du module d'échange de chaleur de la figure 5 ;
- la figure 8 est une vue schématique d'un module d'échange de chaleur conforme à un troisième mode de réalisation de l'invention ;
- les figure 9 à 11 illustrent des variantes de réalisation du module d'échange de chaleur de la figure 8 ;
- la figure 12 est une variante du mode de réalisation de la figure 11 ;
- la figure 13 est une vue schématique d'un modula d'échange de chaleur conforme à un quatrième mode de réalisation de l'invention ;
- la figure 14 est une variante du mode de réalisation de la figure 12 ; et
- la figure 15 est une vue schématique d'un module d'échange de chaleur comportant une seule dérivation de contournement.

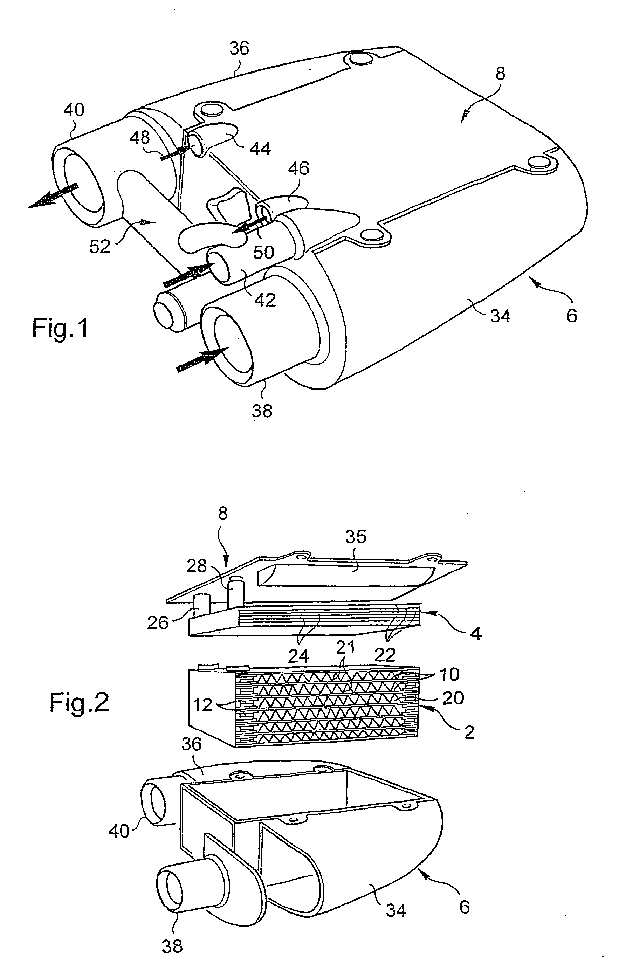

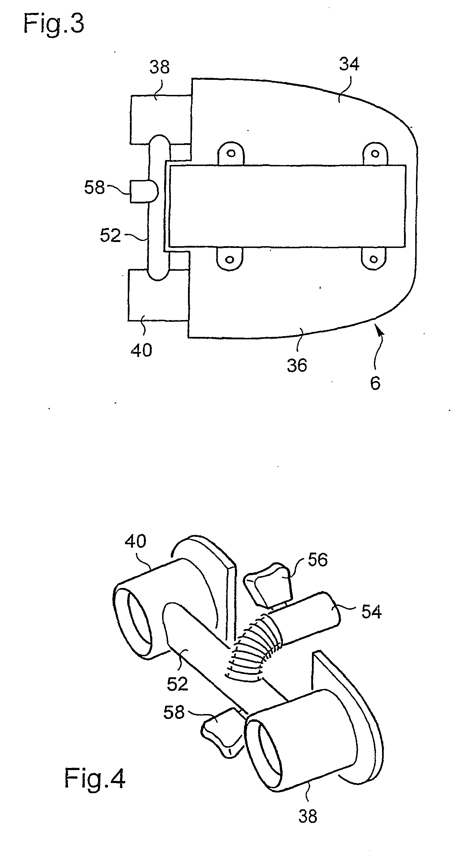

On a représenté sur la figure 1 une vue en perspective et sur la figure 2 une vue en perspective éclatée d'un module d'échange de chaleur conforme à la présente invention pour la régulation en température d'un mélange d'air d'admission et de gaz d'échappement recirculés. La figure 3 est une vue de dessous de ce module.

Le module comprend un refroidisseur d'air d'alimentation désigné par la référence générale 2 et un refroidisseur des gaz d'échappement recirculés désigne par la référence générale 4 (figure 2). Le refroidisseur des gaz d'échappement 4 est disposé sur le radiateur d'air d'alimentation 2. Dans cet exemple de réalisation, les deux échangeurs ont avantageusement la même profondeur et la même longueur pour améliorer le mélange air d'alimentation/gaz d'échappement recirculés, mais ces longueurs et profondeurs pourraient être différentes. Les refroidisseurs 2 et 4 sont montés dans une enveloppe 6 fermée par un couvercle 8.

Dans l'exemple, les échangeurs 2 et 4 sont des échangeurs à plaques. Le refroidisseur d'air d'alimentation 2 est constitué par une superposition de plaques embouties 10 de forme générale rectangulaire. Chaque plaque comporte une paroi de fond sensiblement plane entourée par un rebord périphérique terminé par un méplat. Le fond et le rebord déterminent une cuvette peu profonde destinée à la circulation d'un fluide de refroidissement. Les plaques sont groupées par paires assemblées par leurs méplats. Par ailleurs, deux bossages 12 sont formés le long d'un petit côté du rectangle formé par chacune des plaques. Le fond de chaque bossage 12 comporte un passage de circulation pour le fluide de refroidissement. Les bossages d'une paire de plaques sont en appui sur les bossages des paires de plaques adjacentes. On réalise ainsi un collecteur d'entrée et un collecteur de sortie pour le fluide de refroidissement.

Les bossages des paires de plaques déterminent entre eux des canaux de circulation 20 pour l'air d'alimentation à refroidir. Généralement, des intercalaires ondulés 21 sont disposés dans les canaux de circulation 20.

De la même manière, le refroidisseur des gaz d'échappement 4 est constitué par une superposition de plaques 22 de forme générale rectangulaire dont la configuration peut être identique ou différente de celle des plaques du refroidisseur d'air d'alimentation. Les plaques 22 du refroidisseur des gaz d'échappement recirculés 4 déterminent entre elles des passages 24 pour la circulation des gaz d'échappement. Le fluide de refroidissement, généralement l'eau du circuit de refroidissement du moteur, circule dans les cuvettes déterminées entre les deux plaques d'une même paire. Enfin, les bossages des plaques déterminent un collecteur d'entrée 26 et un collecteur de sortie 28 du fluide de refroidissement.

Dans l'exemple, le circuit de refroidissement du refroidisseur d'air d'alimentation 2 et le circuit de refroidissement du refroidisseur des gaz d'échappement 4 sont montés en parallèle. Ainsi, le module d'échange de chaleur comporte une seule entrée et une seule sortie pour le fluide de refroidissement. L'enveloppe 6 est équipée d'une boîte d'entrée 34 et d'une boîte de sortie 36 pour l'air d'alimentation. La boîte d'entrée 34 comporte une canalisation d'entrée d'air 38 et la boîte de sortie 36 une canalisation de sortie d'air 40. L'enveloppe 6 comporte en outre une canalisation d'entrée des gaz d'échappement recirculés 42. En revanche, il y a pas de sortie des gaz d'échappement recirculés, étant donné que ces derniers sont mélangés à l'air d'alimentation et qu'ils sortent par conséquent par la tubulure de sortie 40 du module d'échange de chaleur.

Le refroidisseur des gaz d'échappement recirculés 4 comporte une boîte d'entrée 35 disposée en regard du faisceau d'échange de chaleur du refroidisseur et une boîte de sortie (non représentée) ou pas de boîte de sortie. Dans ce cas, la boîte 36 sert aussi de boîte de sortie pour le refroidisseur des gaz d'échappement recirculés (figure 2). La boîte d'entrée 35 et la boîte de sortie sont fixées sous le couvercle de fermeture 8 de l'enveloppe 6 (figure 2).

Comme on l'a expliqué précédemment, l'entrée et la sortie du fluide de refroidissement, par exemple l'eau de refroidissement du moteur, sont communes au refroidisseur 2 de l'air d'alimentation et au refroidisseur 4 des gaz d'échappement recirculés (voir figure 1). L'eau du circuit de refroidissement pénètre dans le module d'échange de chaleur par une entrée 44 comme schématisé par la flèche 48 avant de se répartir entre les refroidisseurs 2 et 4. Après circulation dans ses refroidisseurs, l'eau de refroidissement quitte le module d'échange de chaleur par une sortie 46 comme schématisé par la flèche 50.

Conformément à une principale caractéristique de l'invention, le module d'échange de chaleur représenté sur les figures 1 à 4 comporte une dérivation de l'air d'alimentation et une dérivation des gaz d'échappement recirculés, qui sont intégrées. Plus précisément, dans cet exemple, ces deux dérivations sont confondues en une dérivation unique désignée par la référence 52 (voir figure 1 et détails sur la figure 4). La canalisation de dérivation 52 n'est pas nécessairement située à l'intérieur de l'enveloppe 6 du module d'échange de chaleur. Au contraire, comme représenté sur les figures 1 à 4, elle peut être extérieure à cette enveloppe. Toutefois, la dérivation 52 est intégrée dans le sens où l'entrée de cette dérivation est en aval de l'entrée d'air d'alimentation 38 et de l'entrée des gaz d'échappement recirculés 42. En outre, la sortie de la dérivation commune à l'air d'alimentation et aux gaz d'échappement recirculés est située en amont de la tubulure de sortie 40 commune à ces deux gaz.

Comme on peut le voir plus particulièrement sur la figure 4, le module d'échange de chaleur comporte une canalisation 54 par laquelle les gaz d'échappement recirculés pénètrent dans la dérivation 52 de manière à contourner le faisceau d'échange de chaleur du refroidisseur 4. Une vanne 56 permet de régler le débit de ces gaz d'échappement. En outre, une vanne 58 disposée sur la dérivation 52 permet de régler le débit de l'air d'alimentation qui circule au travers de la dérivation 52 en contournant le faisceau d'échange de chaleur du radiateur 2.

Avantageusement, la vanne 56 peut gérer de façon unique et simultanée le débit des gaz d'échappement recirculés qui passent dans la dérivation du refroidisseur des gaz d'échappement recirculés et dans le refroidisseur des gaz d'échappement recirculés. De même, la vanne 58 peut gérer le débit de l'air d'alimentation qui passe dans la dérivation de contournement du refroidisseur d'air d'alimentation et dans le refroidisseur d'air d'alimentation.

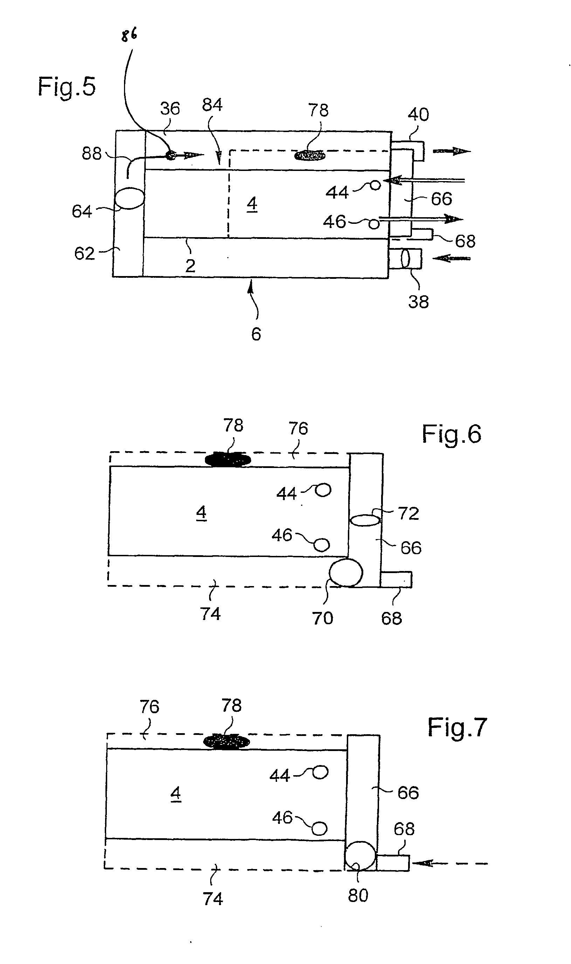

On a représenté sur la figure 5 une vue schématique d'un mode de réalisation d'un module d'échange de chaleur conforme à l'invention. Le module d'échange de chaleur présente une forme rectangulaire allongée en vue de dessus. L'entrée 38 de l'air d'alimentation provenant du turbo-compresseur du moteur et la sortie 40 du mélange d'air d'alimentation et des gaz d'échappement refroidis sont situées le long d'un même petit côté de l'enveloppe 6. Une dérivation 62 de contournement du refroidisseur d'air de suralimentation 2 est disposée le long du petit côté opposé. Une vanne 64 permet de régler la section de passage de la dérivation 62.

Le refroidisseur 4 des gaz d'échappement recirculés a été représenté par un rectangle en traits tiretés. Il est situé au dessus du refroidisseur d'air de suralimentation 2. Dans cet exemple, sa longueur est inférieure à la longueur du refroidisseur d'air de suralimentation. Une dérivation 66 permet le contournement du refroidisseur 4. Dans l'exemple, la dérivation 66 est située le long du même petit côté de l'enveloppe que l'entrée 38 et la sortie 40. En d'autre termes, la dérivation 62 et la dérivation 66 sont situées le long de côtés opposés du module d'échange de chaleur. L'entrée des gaz d'échappement recirculés se fait par une canalisation 68. Cette entrée est commune au refroidisseur 4 et à la canalisation de contournement 66. L'entrée 44 et la sortie 46 de l'eau de refroidissement sont communes au radiateur d'air de suralimentation 2 et au refroidisseur 4 des gaz d'échappement.

On a représenté sur les figures 6 et 7 deux variantes de réalisation du refroidisseur 4 faisant partie du module d'échange de chaleur de la figure 5.

Sur la figure 6, le refroidisseur 4 comporte deux vannes, à savoir une vanne de débit 70 et une vanne de dérivation 72. Les vannes 70 et 72 permettent de régler le débit des gaz d'échappement recirculés, en d'autres termes la fraction des gaz d'échappement sortant du moteur et recirculés pour être injectés une seconde fois dans les chambres de combustion de ce dernier. La fraction non circulée des gaz d'échappement est évacuée directement à l'atmosphère. La vanne de dérivation 72 permet d'ouvrir ou de fermer la dérivation. Lorsque la vanne 72 est ouverte, les gaz d'échappement recirculés contournent le refroidisseur 4 et pénètrent directement dans la boîte de sortie 76. Au contraire, lorsque la vanne 72 est fermée, les gaz d'échappement traversent le faisceau d'échange de chaleur du refroidisseur et sont refroidis avant de pénétrer dans la boîte de sortie 76. Les gaz d'échappement, refroidis ou non, quittent ensuite la boîte de sortie 76 par un orifice de sortie 78 ménagé dans cette dernière et qui est en communication avec la boîte de sortie 36 du refroidisseur d'air de suralimentation 2. L'orifice 78 a une section inférieure ou égale à la section de passage des gaz dans le refroidisseur 2. Avantageusement un déflecteur (non raprésenté) peut être prévu dans la boîte de sortie 36 afin de dévier les gaz d'échappement. Sur les figures 6 et 7, la boîte d'entrée du refroidisseur 4 est désigné par la référence 74.

Le module selon la variante de réalisation représentée sur la figure 7 comporte une vanne 80 unique. Cette vanne assure à la fois le contrôle du débit des gaz d'échappement recirculés et l'ouverture et la fermeture de la canalisation de dérivation 66.

Comme on l'a expliqué précédemment, la longueur du refroidisseur 4 des gaz d'échappement est inférieure à la longueur du refroidisseur d'air de suralimentation 2 de manière à ménager une zone 84 de la boîte de sortie 36 éloignée de la sortie 78 des gaz d'échappement recirculés (figure 5). Un capteur de température 86 est disposé dans la zone 84 afin de mesurer la température de l'air d'admission.

En outre, comme schématisé par la flèche 88, le sens de circulation de l'air d'admission est défini de telle manière que cet air rencontre le capteur de température 86 avant de parvenir au refroidisseur 4 des gaz d'échappement. Grâce à ces dispositions, le capteur de température 86 n'est pas encrassé par les suies contenues dans les gaz d'échappement recirculés.

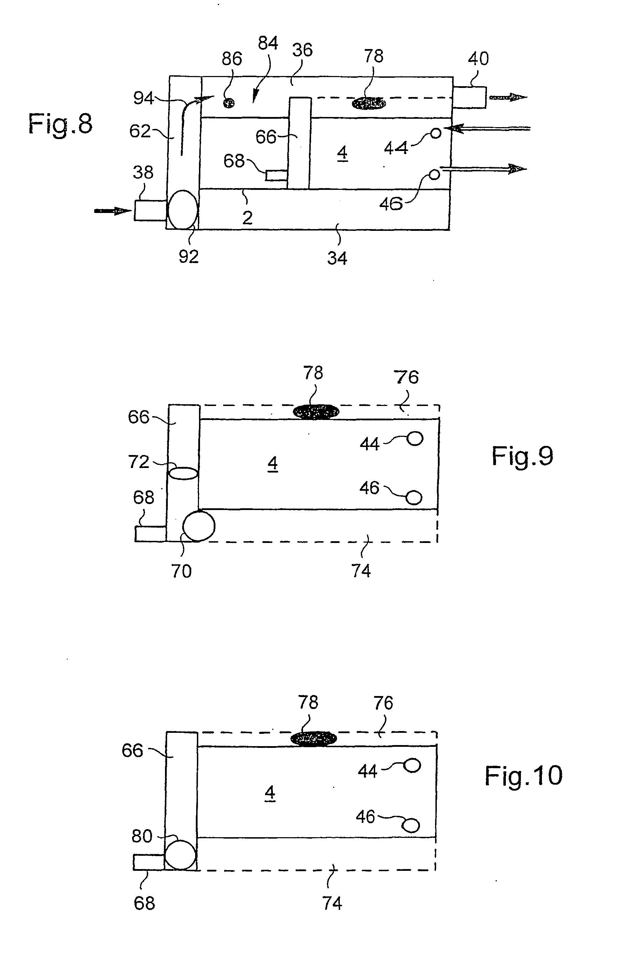

On a représenté sur la figure 8 une vue schématique d'un troisième mode de réalisation d'un module d'échange de chaleur conforme à l'invention. L'entrée de l'air de suralimentation en sortie de turbo-compresseur 38 et la sortie du mélange gazeux d'air et de gaz d'échappement refroidis 40 sont situées le long de petits côtés opposés du module d'échange de chaleur. Une vanne unique 92 assure à la fois la régulation du débit de l'air d'alimentation et l'ouverture et la fermeture de la canalisation de dérivation 62 pour le contournement du refroidisseur d'air de suralimentation 2. Le refroidisseur des gaz d'échappement 4 comporte une canalisation d'entrée 68 raccordée à la canalisation de dérivation 66.

Comme dans le mode de réalisation précédent (figure 5 à 7) la longueur du refroidisseur 4 est inférieure à la longueur du refroidisseur d'air de suralimentation 2 de manière à ménager une zone 84 qui n'est pas polluée par les suies contenues dans les gaz d'échappement recirculés. Le capteur de température d'air d'admission 86 est situé dans cette zone 84. Comme schématisé par la flèche 94, la circulation de l'air d'alimentation en provenance de la canalisation de dérivation 62 se fait de telle manière que l'air d'admission passe sur le capteur de température 86 avant d'être mélangé aux gaz d'échappement recirculés de telle manière que le capteur 86 ne soit pas encrassé par les gaz d'échappement.

On a représenté sur les figures 9 à 11 trois variantes de réalisation du refroidisseur 4 des gaz d'échappement recirculés. Sur la figure 9, ce refroidisseur comporte une vanne 70, de type proportionnel, par exemple une vanne à boisseau, qui permet de réguler le débit des gaz d'échappement recirculés et une vanne 72, qui fonctionne en tout ou rien, qui permet d'ouvrir ou de fermer la canalisation de dérivation 66.

Sur la figure 10 au contraire, le radiateur 4 des gaz d'échappement recirculés comporte une vanne unique assurant simultanément les deux fonctions de régulation du débit des gaz d'échappement recirculés et d'ouverture et de fermeture de la canalisation de dérivation 66.

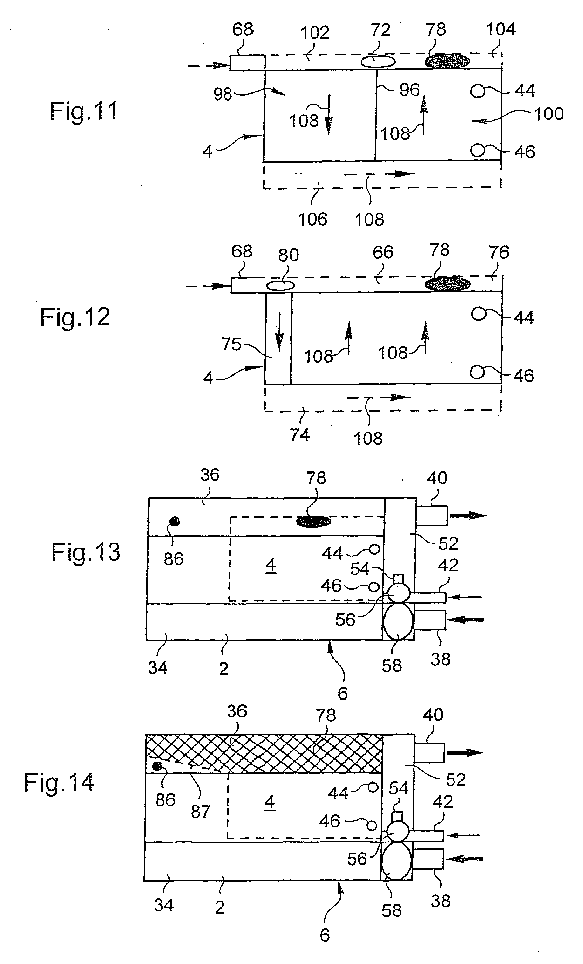

Enfin, sur la figure 11, le radiateur des gaz d'échappement recirculés comporte une cloison de séparation 96 qui sépare le faisceau d'échange de chaleur en une zone 98 et en une zone 100. La boîte d'entrée et la boîte de sortie des gaz d'échappement recirculés ne sont pas situées de part et d'autre du faisceau d'échange de chaleur comme sur les figures 9 et 10, mais le long d'un même grand côté du faisceau d'échange de chaleur. La boîte d'entrée 102 et la boîte de sortie 104 sont séparées l'une de l'autre par une vanne 72 située au niveau de la cloison de séparation 96. De l'autre côté du faisceau d'échange de chaleur, on trouve un compartiment 106 qui permet le passage des gaz d'échappement de la zone d'échange de chaleur 98 à la zone 100. Les gaz d'échappement recirculés empruntent ainsi un parcours en U comme schématisé par les flèches 108.

On a représenté sur la figure 12 une autre variante de réalisation du refroidisseur 4 dans lequel la circulation des gaz d'échappement recirculés se fait en "I". La canalisation d'entrée 68 des gaz d'échappement recirculés est raccordée à la boîte de sortie 76 du refroidisseur 4 des gaz d'échappement recirculés. De la sorte, les gaz d'échappement recirculés pénètrent directement dans la boîte de sortie et ressortent par l'orifice 78 sans avoir à transiter par une canalisation de dérivation. La boîte de sortie joue donc le rôle de dérivation de contournement. La fraction des gaz à refroidir est ramenée en amont de l'échangeur par un canal de transfert 75 qui débouche dans la boîte d'entrée 74. Une vanne à boisseau 80 est disposée à la jonction de la boîte de sortie 76 et du canal de transfert 75. Cette vanne régule à la fois le débit et la répartition des gaz d'échappement recirculés entre la boîte de sortie et le canal de transfert. En variante, on pourrait prévoir deux vannes séparées. Les gaz parvenus dans la boîte d'entrée 74 traversent le faisceau de l'échangeur 4, comme schématisé par les flèches 108 avant de quitter l'échangeur par l'orifice 78 en se mêlant à La fraction non refroidie des gaz recirculés.

On a représenté sur la figure 13 encore un autre mode de réalisation d'un module d'échange de chaleur conforme à l'invention. Ce mode de réalisation correspond à la représentation en perspective qui a été décrite en référence aux figures 1 à 4. Le module comporte une canalisation de dérivation 52 unique, commune à l'air d'admission et aux gaz d'échappement recirculés. L'entrée 38 de l'air d'admission en sortie de turbo-compresseur et la sortie 40 du mélange d'air d'admission et de gaz d'échappement recirculés refroidis sont situées le long d'un même petit côté de l'enveloppe 6 de l'échangeur de chaleur. Les gaz d'échappement recirculé s pénètrent par une canalisation d'amenée 42. Une canalisation 54 permet d'amener une partie des gaz d'échappement recirculés jusqu'à la dérivation 52.

Une vanne 56, située au raccordement des canalisations 42 et 54, assure simultanément la régulation du débit des gaz d'échappement recirculés et l'ouverture et la fermeture de la canalisation 54, en d'autres termes de la dérivation dés gaz d'échappement recirculés. La vanne unique 58 assure simultanément la régulation du débit d'air d'admission en sortie de turbo-compresseur et l'ouverture et la fermeture de la canalisation de dérivation 52 de l'air d'admission.

Dans ce mode de réalisation, la longueur du refroidisseur 4 des gaz d'échappement recirculés est inférieure à la longueur du refroidisseur 2 d'air de suralimentation. Toutefois, dans le mode de fonctionnement avec gaz d'échappement recirculés, en d'autres termes lorsqu'une partie des gaz d'échappement est recirculée dans le module d'échange de chaleur, la température de l'air d'admission n'est pas mesurée par le capteur de température 86 situé dans la zone 84, mais estimée par un modèle mathématique prédictif, par exemple au moyen d'un calculateur dans lequel on introduit les valeurs des débits d'air et de gaz d'échappement, leur température, etc. Le capteur ne risque donc pas d'être encrassé.

L'ensemble constitué par la canalisation commune de dérivation 52; l'entrée 38 et la sortie 40 raccordées à cette canalisation de dérivation, l'entrée 42 des gaz d'échappement recirculés, la canalisation 54 et la vanne 56, ainsi que, également, la vanne de régulation du débit d'air 58 peuvent constituer un sous module rapporté sur la partie principale du module d'échange de chaleur de l'invention.

On a représenté sur la figure 14 une autre variante de réalisation du refroidisseur 4 de la figure 13. Cette réalisation se distingue par le fait que l'orifice de sortie 78 s'étend sur toute la longueur de la boîte de sortie 76. Etant donné que, dans cette variante, la longueur du refroidisseur 4 est inférieure à celle du refroidisseur 2 de l'air d'alimentation, une paroi constituant un divergent 87 assure une transition entre les deux boîtes. La section de l'orifice de sortie 78 est supérieure à celle du refroidisseur des gaz d'échappement recirculés ce qui réduit de façon importante les pertes de charges sur le refroidisseur 4 et améliore le mélange de l'air d'alimentation avec les gaz recirculés.

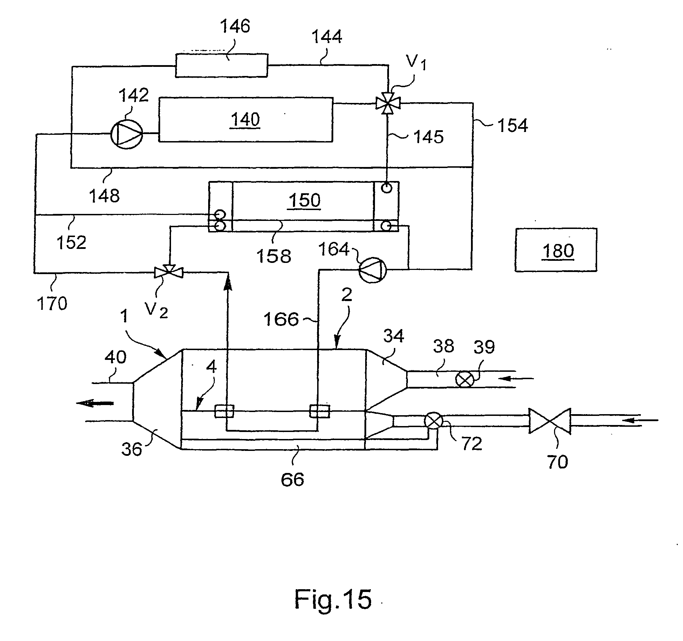

On a représenté sur la figure 15 un système de gestion de l'énergie thermique d'un moteur 140 de véhicule automobile comprenant un module d'échange de chaleur 1 selon l'invention. Il comprend un refroidisseur d'air d'alimentation 2 et un refroidisseur des gaz d'échappement recirculés 4. L'air d'alimentation pénètre dans la boîte d'entrée 34 par la canalisation 38 sur laquelle est montée une vanne 39 de régulation du débit qui permet de régler la dépression. Cette vanne est optionnelle. Après refroidissement, l'air d'alimentation passe dans la boîte de sortie 36 et quitte le refroidisseur par la canalisation 40. Contrairement aux réalisations précédentes, le refroidisseur d'air d'alimentation ne comporte pas de dérivation de contournement. La totalité de l'air d'alimentation est refroidie dans le refroidisseur 2. En revanche, le refroidisseur 4 des gaz d'échappement recirculés comporte une dérivation de contournement 66, comme dans les réalisations précédentes. Une vanne de débit 70 est montée sur la canalisation d'arrivée 68. Une vanne de répartition 72 règle la répartition entre le refroidisseur et la dérivation de contournement 66. Le refroidisseur 4 ne comporte pas de boîte de sortie, car la boîte de sortie 36 est commune aux deux refroidisseurs. La boîte 36 joue donc fonctionnellement le rôle d'une boîte de sortie pour le refroidisseur 4 des gaz d'échappement recirculés.

Le module 1 est raccordé aux circuits de refroidissement à haute et à basse température du véhicule. Le circuit à haute température comprend une pompe principale 142 qui fait circuler un liquide de refroidissement à travers le moteur 140. Après avoir traversé le moteur, le liquide est réparti entre différentes branches par une vanne à quatre voies V1. Il peut emprunter une dérivation 144 sur laquelle est monté un radiateur de chauffage 146. Le liquide peut également emprunter une canalisation de dérivation 148 qui le ramène à la pompe 142 sans refroidissement. Une troisième voie de la vanne V1 est raccordée à une canalisation 145 qui amène le liquide de refroidissement à un radiateur à haute température 150. A sa sortie, le liquide est ramené à la pompe par la canalisation 152. Enfin, une quatrième voie de la vanne V1 est raccordée à une canalisation 154 qui amène le liquide dans un radiateur à basse température 158 dans lequel il peut être refroidi à une température plus basse que dans le radiateur à haute température. Une vanne à trois voies V2 est disposée après le radiateur. Une voie V21 est raccordée à une canalisation 166, comportant une pompe de circulation 164 et qui traverse les refroidisseurs 2 et 4. Une voie V22 est raccordée à la canalisation qui sort du radiateur à basse température et une troisième voie à la canalisation 170 qui ramène le liquide au moteur. Selon la position des vannes V1 et V2, le module 1 est donc alimenté en liquide à haute température (100°C) ou à basse température (40°C à 60°C). Le refroidisseur 2 fonctionne par conséquent selon 2 modes-Lorsqu'il est parcouru par du liquide à basse température, il sert de refroidisseur de l'air d'alimentation. Lorsqu'il est parcouru par du liquide à haute température, il sert de réchauffeur de l'air d'alimentation. En revanche, le refroidisseur 4 fonctionne uniquement en tant que refroidisseur des gaz d'échappement recirculés.

## Revendications

1. Module d'échange de chaleur pour la régulation en température d'un mélange d'air d'admission et de gaz d'échappement recirculés admis dans un moteur thermique de véhicule automobile, comprenant un refroidisseur d'air d'alimentation (2) et un refroidisseur (4) des gaz d'échappement recirculés, le refroidisseur d'air d'alimentation comprenant une boîte d'entrée (34) et une boîte de sortie (36) de l'air d'alimentation, le refroidisseur (4) des gaz d'échappement recirculés comprenant une boîte d'entrée. (74) et une boîte de sortie (76) des gaz d'échappement recirculés,
**caractérisé en ce qu'**il comporte une première dérivation de contournement (52, 66) reliant directement la boîte d'entrée (74) à la boîte de sortie (76) du refroidisseur (4) des gaz d'échappement recirculés, et une seconde dérivation de contournement (52, 62) reliant directement la boîte d'entrée (34) à la boîte de sortie (36) du refroidisseur (2) d'agir d'alimentation, lesdites première et seconde dérivation étant intégrées au module d'échange de chaleur.

2. Module d'échange de chaleur selon la revendication 1, **caractérisé** dans lequel une canalisation d'entrée (38) de l'air d'alimentation est raccordée à la boîte d'entrée (34), et une canalisation de sortie d'air d'alimentation (40) à la boîte de sortie (36) du refroidisseur d'air d'alimentation, et/ou une canalisation d'entrée (42, 688) des gaz d'échappement recirculés est raccordée à la boîte d'entrée (74) du refroidisseur des gaz d'échappement recirculés.

3. Module d'échange de chaleur selon l'une des revendications 1 et 2, **caractérisé en ce qu'**il comporte de premiers moyens de répartition (56, 70, 72, 80) pour répartir les gaz d'échappement recirculés entre le refroidisseur (4) des gaz d'échappement recirculés et la première dérivation de contournement (52, 66).

4. Module d'échange de chaleur selon l'une des revendications 2 et 3, **caractérisé en ce qu'**il comporte de seconds moyens de répartition (58, 60, 92) pour répartir l'air d'alimentation entre le refroidisseur (2) d'air d'alimentation et la seconde dérivation de contournement (52, 62).

5. Module d'échange de chaleur selon les revendication 3 et 4, **caractérisé en ce qu'**il comporte des moyens de commande (180) reliés aux premiers et aux seconds moyens de répartition pour ajuster la proportion des gaz d'admission refroidis ou réchauffés, des gaz d'admission qui n'ont été ni refroidis ni réchauffés, des gaz d'échappement recirculés refroidis et des gaz d'échappement recirculés qui n'ont été ni refroidis ni réchauffés, selon une loi prédéfinie.

6. Module d'échange de chaleur selon 'l'une des revendications 2 à 5, **caractérisé en ce que** la première et la seconde dérivations sont distinctes l'une de l'autre.

7. Module d'échange de chaleur selon l'une des revendications 2 à 5, **caractérisé en ce que** la première et la seconde dérivation sont confondues en une dérivation unique (52).

8. Module d'échange de chaleur selon l'une des revendications 1 à 7, **caractérisé en ce qu'**il comporte au moins une vanne proportionnelle (80), par exemple une vanne à organe rotatif, pour gérer à la fois le débit d'air d'admission et le débit des gaz d'échappement recirculés, ainsi que la température du mélange d'admission.

9. Module d'échange de chaleur selon l'une des revendications 4 à 8, **caractérisé en ce que** les dérivations et les moyens de répartition de l'air d'admission et des gaz d'échappement recirculés constituent un sous module rapporté sur le module d'échange de chaleur.

10. Module d'échange de chaleur selon l'une des revendications 1 à 9, **caractérisé en ce que** l'entrée (38) de l'air d'admission dans la boîte d'entrée (34) du refroidisseur (2) d'air d'alimentation et la sortie (40) de cet air d'alimentation, éventuellement mélangé aux gaz d'échappement recirculés, de la boîte de sortie (36) du refroidisseur d'air d'alimentation sont situées le long d'un même côté du module.

11. Module d'échange de chaleur selon l'une des revendications 1 à 9, **caractérisé en ce que** l'entrée (38) de l'air d'alimentation dans la boîte d'entrée (34) du refroidisseur d'air d'alimentation et la sortie (40) de cet air d'alimentation, éventuellement mélangé aux gaz d'échappement recirculés, de la boîte de sortie (36) du refroidisseur (2) d'air d'alimentation sont situées sur des côtés différents du module.

12. Module d'échange de chaleur selon l'une des revendications 1 à 11, **caractérisé en ce que** la circulation des gaz d'échappement recirculés dans le refroidisseur (4) des gaz d'échappement recirculés s'effectue en deux passes selon un parcours en U.

13. Module d'échange de chaleur selon l'une des revendications 1 à 12, **caractérisé en ce qu'**une canalisation d'entrée (68) des gaz d'échappement recirculés est raccordée à la boîte de sortie (76) du refroidisseur (4) des gaz d'échappement recirculés, cette dernière constituant la première dérivation de contournement (66), le refroidisseur (4) comportant un canal de transfert (75) pour amener la fraction à refroidir des gaz d'échappement recirculés jusqu'à la boîte d'entrée (74) ; une vanne (80) étant disposée à la jonction de la boîte de sortie (76) et du canal de transfert (75) pour répartir les gaz d'échappement recirculés entre la boîte de sortie (76) et le canal de transfert (75).

14. Module d'échange de chaleur selon l'une des revendications 1 à 13, **caractérisé en ce qu'**il comporte un capteur (86) de la température de l'air d'admission situé dans une zone (84) de la boîte de sortie (36) du refroidisseur d'air d'alimentation qui n'est pas traversée par les gaz d'échappement recirculés.

15. Module d'échange de chaleur selon la revendication 14, **caractérisé en ce que** le refroidisseur (4) des gaz d'échappement recirculés présente une longueur inférieure à la longueur du refroidisseur (2) de l'air d'alimentation de manière à ménager une zone (84) de la boîte de sortie du refroidisseur de l'air d'alimentation qui n'est pas traversée par les gaz d'échappement recirculés.

16. Module d'échange de chaleur selon l'une des revendications 1 à 15, **caractérisé en ce que** le refroidisseur (2) de l'air d'alimentation comporte un déflecteur des gaz d'échappement recirculés (87) disposé face à la sortie (78) des gaz d'échappement recirculés afin de dévier ces gaz vers la boîte de sortie (36) du refroidisseur (2) de l'air d'alimentation.

17. Module d'échange de chaleur selon l'une des revendications 1 à 16, **caractérisé en ce que** les gaz d'échappement recirculés passent de la boîte de sortie (76) du refroidisseur (4) des gaz d'échappement recirculés dans la boîte de sortie (36) du refroidisseur d'air d'alimentation (2) par un orifice de sortie (78) dont la section est inférieure ou égale à la section de passage des gaz dans le refroidisseur (4) des gaz d'échappement recirculés.

18. Module d'échange de chaleur selon l'une des revendications 1 à 16, **caractérisé en ce que** les gaz d'échappement recirculés passent de la boîte de sortie (76) du refroidisseur (4) des gaz d'échappement recirculés dans la boîte de sortie (36) du refroidisseur d'air d'alimentation (2) par un orifice de sortie (78) dont la section est supérieure à la section de passage des gaz dans le refroidisseur (4) des gaz d'échappement recirculés et **en ce que** la boîte de sortie (76) du refroidisseur (4) des gaz d'échappement recirculés et la boîte de sortie (36) du refroidisseur d'air d'alimentation (2) sont raccordées l'une à l'autre par un divergent (87).

19. Module d'échange de chaleur selon l'une des revendications 1 à 18, **caractérisé en ce que** les gaz d'échappement recirculés débouchent directement dans la boîte de sortie (36) du refroidisseur d'air d'alimentation (2), cette boîte jouant fonctionnellement le rôle d'une boîte dé sortie pour le refroidisseur (4) des gaz d'échappement recirculés.

## Claims

1. Heat exchange tube bundle for regulating the temperature of an intake air mixture and of recirculated exhaust gases entering an internal combustion engine of a motor vehicle, comprising a feed air cooler (2) and a recirculated exhaust gas cooler (4), the feed air cooler comprising a feed air inlet manifold (34) and a feed air outlet manifold (36), the recirculated exhaust gas cooler (4) comprising a recirculated exhaust gas inlet manifold (74) and a recirculated exhaust gas outlet manifold (76), **characterized in that** it comprises a first bypass (52, 66) directly connecting the inlet manifold (74) to the outlet manifold (76) of the recirculated exhaust gas cooler (4), and a second bypass (52, 62) directly connecting the inlet manifold (34) to the outlet manifold (36) of the feed air cooler (2), said first and second bypasses being incorporated in the heat exchange tube bundle.

2. Heat exchange tube bundle according to Claim 1, in which a feed air inlet line (38) is connected to the inlet manifold (34), and a feed air outlet line (40) to the outlet manifold (36) of the feed air cooler, and/or a recirculated exhaust gas inlet line (42, 68) is connected to the inlet manifold (74) of the recirculated exhaust gas cooler.

3. Heat exchange tube bundle according to either of Claims 1 and 2, **characterized in that** it comprises first distribution means (56, 70, 72, 80) for distributing the recirculated exhaust gases between the recirculated exhaust gas cooler (4) and the first bypass (52, 66).

4. Heat exchange tube bundle according to either of Claims 2 and 3, **characterized in that** it comprises second distribution means (58, 60, 92) for distributing the feed air between the feed air cooler (2) and the second bypass (52, 62).

5. The heat exchange tube bundle as claimed in Claims 3 and 4, **characterized in that** it comprises control means (180) connected to the first and second distribution means for adjusting the proportion of cooled or heated inlet gases, inlet gases which have been neither cooled nor heated, cooled recirculated exhaust gases and recirculated exhaust gases which have been neither cooled nor heated, according to a predefined law.

6. Heat exchange tube bundle according to one of Claims 2 to 5, **characterized in that** the first and second bypasses are different and separate from one another.

7. Heat exchange tube bundle according to one of Claims 2 to 5, **characterized in that** the first and second bypasses are merged in a single bypass (52).

8. Heat exchange tube bundle according to one of Claims 1 to 7, **characterized in that** it comprises at least one proportional valve (80), for example a rotary valve, for managing both the intake air flow rate and the recirculated exhaust gas flow rate, and also the temperature of the intake mixture.

9. Heat exchange tube bundle according to one of Claims 4 to 8, **characterized in that** the bypasses and intake air and recirculated exhaust gas distribution means constitute a submodule added on to the heat exchange tube bundle.

10. Heat exchange tube bundle according to one of Claims 1 to 9, **characterized in that** the inlet (38) of the intake air in the inlet manifold (34) of the feed air cooler (2) and the outlet (40) of this feed air, optionally mixed with the recirculated exhaust gases, from the outlet manifold (36) of the feed air cooler, are located along the same side of the module.

11. Heat exchange tube bundle according to one of Claims 1 to 9, **characterized in that** the inlet (38) of the feed air in the inlet manifold (34) of the feed air cooler and the outlet (40) of this feed air, optionally mixed with the recirculated exhaust gases, from the outlet manifold (36) of the feed air cooler (2), are located on different sides of the module.

12. Heat exchange tube bundle according to one of Claims 1 to 11, **characterized in that** the circulation of the recirculated exhaust gases in the recirculated exhaust gas cooler (4) takes place in two passes along a U route.

13. Heat exchange tube bundle according to one of Claims 1 to 12, **characterized in that** a recirculated exhaust gas inlet line (68) is connected to the outlet manifold (76) of the recirculated exhaust gas cooler (4), the latter constituting the first bypass (66), the cooler (4) comprising a transfer channel (75) to convey the fraction of the recirculated exhaust gases to be cooled to the inlet manifold (74); a valve (80) being arranged at the junction of the outlet manifold (76) and the transfer channel (75) to distribute the recirculated exhaust gases between the outlet manifold (76) and the transfer channel (75).

14. Heat exchange tube bundle according to one of Claims 1 to 13, **characterized in that** it comprises a sensor (86) of the intake air temperature located in a zone (84) of the outlet manifold (36) of the feed air cooler which is not traversed by the recirculated exhaust gases.

15. Heat exchange tube bundle according to Claim 14, **characterized in that** the recirculated exhaust gas cooler (4) has a length that is shorter than the length of the feed air cooler (2) so as to arrange a zone (84) of the outlet manifold of the feed air cooler which is not traversed by the recirculated exhaust gases.

16. Heat exchange tube bundle according to one of Claims 1 to 15, **characterized in that** the feed air cooler (2) comprises a recirculated exhaust gas deflector (87) arranged facing the outlet (78) of the recirculated exhaust gases in order to deviate these gases toward the outlet manifold (36) of the feed air cooler (2).

17. Heat exchange tube bundle according to one of Claims 1 to 16, **characterized in that** the recirculated exhaust gases pass from the outlet manifold (76) of the recirculated exhaust gas cooler (4) into the outlet manifold (36) of the feed air cooler (2) via an outlet orifice (78) of which the cross section is smaller than or equal to the flow area for the gases in the recirculated exhaust gas cooler (4).

18. Heat exchange tube bundle according to one of Claims 1 to 16, **characterized in that** the recirculated exhaust gases pass from the outlet manifold (76) of the recirculated exhaust gas cooler (4) into the outlet manifold (36) of the feed air cooler (2) via an outlet orifice (78) of which the cross section is larger than the flow area for the gases in the recirculated exhaust gas cooler (4) and **in that** the outlet manifold (76) of the recirculated exhaust gas cooler (4) and the outlet manifold (36) of the feed air cooler (2) are connected to each other by a divergent part (87).

19. Heat exchange tube bundle according to one of Claims 1 to 18, **characterized in that** the recirculated exhaust gases flow directly into the outlet manifold (36) of the feed air cooler (2), this manifold functionally playing the role of an outlet manifold for the recirculated exhaust gas cooler (4).

## Patentansprüche

1. Wärmetauschermodul zur Regelung der Temperatur einer Mischung aus Ansaugluft und rückgeführten Abgasen, die in einen Verbrennungsmotor eines Kraftfahrzeugs angesaugt wird, mit einem Ladeluftkühler (2) und einem Kühler (4) der rückgeführten Abgase, wobei der Ladeluftkühler einen Eintrittskasten (34) und einen Austrittkasten (36) der Ladeluft enthält, wobei der Kühler (4) der rückgeführten Abgase einen Eintrittskasten (74) und einen Austrittskasten (76) der rückgeführten Abgase enthält,
**dadurch gekennzeichnet, dass** es eine erste Umgehungsabzweigung (52, 66), die den Eintrittskasten (74) direkt mit dem Austrittskasten (76) des Kühlers (4) der rückgeführten Abgase verbindet, und eine zweite Umgehungsabzweigung (52, 62) enthält, die den Eintrittskasten (34) direkt mit dem Austrittskasten (36) des Ladeluftkühlers (2) verbindet, wobei die erste und die zweite Abzweigung in das Wärmetauschermodul integriert sind.

2. Wärmetauschermodul nach Anspruch 1, bei dem ein Ladeluft-Eintrittsrohr (38) an den Eintrittskasten (34) und ein Ladeluft-Austrittsrohr (40) an den Austrittskasten (36) des Ladeluftkühlers angeschlossen ist, und/oder ein Eintrittsrohr (42, 68) der rückgeführten Abgase an den Eintrittskasten (74) des Kühlers der rückgeführten Abgase angeschlossen ist.

3. Wärmetauschermodul nach einem der Ansprüche 1 und 2, **dadurch gekennzeichnet, dass** es erste Verteilermittel (56, 70, 72, 80) aufweist, um die rückgeführten Abgase zwischen dem Kühler (4) der rückgeführten Abgase und der ersten Umgehungsabzweigung (52, 66) zu verteilen.

4. Wärmetauschermodul nach einem der Ansprüche 2 und 3, **dadurch gekennzeichnet, dass** es zweite Verteilermittel (58, 60, 92) aufweist, um die Ladeluft zwischen dem Ladeluftkühler (2) und der zweiten Umgehungsabzweigung (52, 62) zu verteilen.

5. Wärmetauschermodul nach den Ansprüchen 3 und 4,
**dadurch gekennzeichnet, dass** es Steuermittel (180) aufweist, die mit den ersten und den zweiten Verteilermitteln verbunden sind, um den Anteil der gekühlten oder erwärmten Ansauggase, der Ansauggase, die weder gekühlt noch erwärmt wurden, der gekühlten rückgeführten Abgase und der rückgeführten Abgase, die weder gekühlt noch erwärmt wurden, gemäß einem vorab definierten Gesetz anzupassen.

6. Wärmetauschermodul nach einem der Ansprüche 2 bis 5, **dadurch gekennzeichnet, dass** die erste und die zweite Abzweigung sich voneinander unterscheiden.

7. Wärmetauschermodul nach einem der Ansprüche 2 bis 5, **dadurch gekennzeichnet, dass** die erste und die zweite Abzweigung in einer einzigen Abzweigung (52) zusammenfallen.

8. Wärmetauschermodul nach einem der Ansprüche 1 bis 7, **dadurch gekennzeichnet, dass** es mindestens ein Proportionalventil (80) aufweist, zum Beispiel ein Ventil mit drehendem Organ, um sowohl den Ansaugluftdurchsatz als auch den Durchsatz der rückgeführten Abgase sowie die Temperatur der Ansaugmischung zu verwalten.

9. Wärmetauschermodul nach einem der Ansprüche 4 bis 8, **dadurch gekennzeichnet, dass** die Abzweigungen und die Verteilermittel der Ansaugluft und der rückgeführten Abgase ein Submodul bilden, das an das Wärmetauschermodul angebaut ist.

10. Wärmetauschermodul nach einem der Ansprüche 1 bis 9, **dadurch gekennzeichnet, dass** der Eintritt (38) der Ansaugluft in den Eintrittskasten (34) des Ladeluftkühlers (2) und der Austritt (40) dieser Ladeluft, ggf. vermischt mit den rückgeführten Abgasen, aus dem Austrittskasten (36) des Ladeluftkühlers entlang einer gleichen Seite des Moduls angeordnet sind.

11. Wärmetauschermodul nach einem der Ansprüche 1 bis 9, **dadurch gekennzeichnet, dass** der Eintritt (38) der Ladeluft in den Eintrittskasten (34) des Ladeluftkühlers und der Austritt (40) dieser Ladeluft, ggf. vermischt mit den rückgeführten Abgasen, aus dem Austrittskasten (36) des Ladeluftkühlers (2) auf verschiedenen Seiten des Moduls angeordnet sind.

12. Wärmetauschermodul nach einem der Ansprüche 1 bis 11, **dadurch gekennzeichnet, dass** der Durchfluss der rückgeführten Abgase im Kühler (4) der rückgeführten Abgase in zwei Durchläufen gemäß einer U-förmigen Strecke erfolgt.

13. Wärmetauschermodul nach einem der Ansprüche 1 bis 12, **dadurch gekennzeichnet, dass** ein Eintrittsrohr (68) der rückgeführten Abgase an den Austrittskasten (76) des Kühlers (4) der rückgeführten Abgase angeschlossen ist, wobei letzterer die erste Umgehungsabzweigung (66) bildet, wobei der Kühler (4) einen Übertragungskanal (75) aufweist, um den zu kühlenden Anteil der rückgeführten Abgase bis zum. Eintrittskasten (74) zu bringen; wobei ein Ventil (80) an der Verbindungsstelle zwischen dem Austrittskasten (76) und den Übertragungskanal (75) angeordnet ist, um die rückgeführten Abgase zwischen dem Austrittskasten (76) und dem Übertragungskanal (75) zu verteilen.

14. Wärmetauschermodul nach einem der Ansprüche 1 bis 13, **dadurch gekennzeichnet, dass** es einen Temperaturfühler (86) der Ansaugluft aufweist, der sich in einer Zone (84) des Austrittskastens (36) des Ladeluftkühlers befindet, die nicht von den rückgeführten Abgasen durchquert wird.

15. Wärmetauschermodul nach Anspruch 14, **dadurch gekennzeichnet, dass** der Kühler (4) der rückgeführten Abgase eine geringere Länge als die Länge des Ladeluftkühlers (2) hat, um eine Zone (84) des Austrittskastens des Ladeluftkühlers auszusparen, die nicht von den rückgeführten Abgasen durchquert wird.

16. Wärmetauschermodul nach einem der Ansprüche 1 bis 15, **dadurch gekennzeichnet, dass** der Ladeluftkühler (2) ein Ablenkblech für die rückgeführten Abgase (87) aufweist, das gegenüber dem Austritt (78) der rückgeführten Abgase angeordnet ist, um diese Gase zum Austrittskasten (36) des Ladeluftkühlers (2) umzulenken.

17. Wärmetauschermodul nach einem der Ansprüche 1 bis 16, **dadurch gekennzeichnet, dass** die rückgeführten Abgase vom Austrittskasten (76) des Kühlers (4) der rückgeführten Abgase in den Austrittskasten (36) des Ladeluftkühlers (2) über eine Austrittsöffnung (78) gehen, deren Querschnitt kleiner als der oder gleich dem Durchgangsquerschnitt der Gase im Kühler (4) der rückgeführten Abgase ist.

18. Wärmetauschermodul nach einem der Ansprüche 1 bis 16, **dadurch gekennzeichnet, dass** die rückgeführten Abgase vom Austrittskasten (76) des Kühlers (4) der rückgeführten Abgase in den Austrittskasten (36) des Ladeluftkühlers (2) über eine Austrittsöffnung (78) gehen, deren Querschnitt größer als der Durchgangsquerschnitt der Gase in dem Kühler (4) der rückgeführten Abgase ist, und dass der Austrittskasten (76) des Kühlers (4) der rückgeführten Abgase und der Austrittskasten (36) des Ladeluftkühlers (2) über ein Übergangsstück (87) aneinander angeschlossen sind.

19. Wärmetauschermodul nach einem der Ansprüche 1 bis 18, **dadurch gekennzeichnet, dass** die rückgeführten Abgase direkt in den Austrittskasten (36) des Ladeluftkühlers (2) münden, wobei dieser Kasten funktional die Aufgabe eines Austrittskastens für den Kühler (4) der rückgeführten Abgase hat.
